# EUROPEAN PATENT APPLICATION

(11) **EP 4 759 592 A1**
(43) Date of publication of application: **17.06.2026**
(21) Application number: 24853149.3
(22) Date of filing: 28.02.2024
(51) Int. Cl.: B60K 6/20, B60K 6/40, B60K 6/52, B60K 6/24, B60K 6/26

(54) **HYBRID DRIVE SYSTEM OF VEHICLE, AND VEHICLE**

(30) Priority: 16.08.2023 CN 202311036706
(71) Applicant: BYD Company Limited, Shenzhen, Guangdong 518118 (CN)
(72) Inventor: YANG, Dongsheng, Shenzhen, Guangdong 518118 (CN); WANG, Jianxin, Shenzhen, Guangdong 518118 (CN); TANG, Lizhong, Shenzhen, Guangdong 518118 (CN); WANG, Kuncheng, Shenzhen, Guangdong 518118 (CN); YANG, Ningning, Shenzhen, Guangdong 518118 (CN)
(74) Representative: Taor, Simon Edward William
(86) International application number: PCT/CN2024/079003
(87) International publication number: WO 2025/035733

(57) **Abstract**

A hybrid drive system (1000) for a vehicle and a vehicle are provided. The hybrid drive system (1000) includes: an electric drive powertrain (200) for driving one of a front axle and a rear axle of the vehicle; and a hybrid powertrain (100) for driving the other of the front axle and the rear axle of the vehicle. The hybrid powertrain (100) and the electric drive powertrain (200) are configured to: control the hybrid powertrain (100) to drive the vehicle, and/or control the electric drive powertrain (200) to drive the vehicle based on a target gear position, where the target gear position includes a first gear position and a second gear position.

## Description

### CROSS-REFERENCE TO RELATED APPLICATIONS

This application is based on Chinese Patent Application No. 202311036706.9, filed on August 16, 2023, and claims priority to the foregoing Chinese Patent Application, which is incorporated herein by reference in its entirety.

### TECHNICAL FIELD

This application relates to the field of vehicles, and in particular, to a hybrid drive system for a vehicle and a vehicle having the hybrid drive system for a vehicle.

### BACKGROUND

In a related technology, existing vehicle drive systems suffer from a limited quantity of operating modes and low operating efficiency. After the drive system is mounted in a vehicle, the drive system cannot adjust the operating mode of the drive system based on a traveling condition, and the drive system has poor power performance and off-road performance, resulting in a poor off-road recovery capability and an increase in fuel consumption of the vehicle.

### SUMMARY

This application is intended to resolve one of technical problems in a related technology to at least some extent.

Therefore, an objective of this application is to provide a hybrid drive system for a vehicle, which can improve operating efficiency of the hybrid drive system, can also reduce energy consumption of the hybrid drive system, and can improve an off-road recovery capability and a hill-climbing capability of the vehicle.

Another objective of this application is to provide a vehicle.

The hybrid drive system for a vehicle according to this application includes:
an electric drive powertrain for driving one of a front axle and a rear axle of the vehicle, where the electric drive powertrain has at least a first gear position and a second gear position; and
a hybrid powertrain for driving the other of the front axle and the rear axle of the vehicle, where
the hybrid powertrain and the electric drive powertrain are configured to: control the hybrid powertrain to drive the vehicle, and/or control the electric drive powertrain to drive the vehicle based on a target gear position, and the target gear position includes the first gear position and the second gear position.

In the hybrid drive system for a vehicle according to this application, through cooperation of the electric drive powertrain and the hybrid powertrain, based on a traveling condition and a driver requirement, at least one of the hybrid powertrain and the electric drive powertrain can be properly selected to drive the vehicle, and an optimal operating mode that matches the vehicle can be selected. In this way, the operating efficiency of the hybrid drive system can be improved, and the energy consumption of the hybrid drive system can also be reduced. A power requirement of the vehicle can be met when the vehicle travels in different road conditions, so that the off-road recovery capability and the hill-climbing capability of the vehicle can be improved.

The vehicle according to this application includes the foregoing drive system for a vehicle.

In the vehicle according to this application, the hybrid drive system of this application is mounted on the vehicle, so that based on a traveling condition and a driver requirement, an operating mode of the hybrid drive system can be properly selected, and an optimally matched operating mode can be selected. In this way, the operating efficiency of the hybrid drive system can be improved, the energy consumption of the hybrid drive system can also be reduced, the power performance of the hybrid drive system can be improved, and the off-road performance, the off-road recovery capability, and the hill-climbing capability of the vehicle can be improved.

Additional aspects and advantages of this application are set forth in part in the following description, and in part become apparent from the following description, or may be learned through the practice of this application.

### BRIEF DESCRIPTION OF DRAWINGS

FIG. 1 is a diagram in which a hybrid drive system according to a first embodiment of this application is mounted in a vehicle;
FIG. 2 is a diagram in which a hybrid drive system according to a second embodiment of this application is mounted in a vehicle;
FIG. 3 is a diagram of a hybrid powertrain of a hybrid drive system according to a third embodiment of this application;
FIG. 4 is a diagram of a hybrid powertrain of a hybrid drive system according to a fourth embodiment of this application; and
FIG. 5 is a diagram in which a hybrid drive system according to embodiments of this application is mounted in a vehicle.

### DESCRIPTION OF EMBODIMENTS

Embodiments of this application are described in detail below, examples of which are shown in the accompanying drawings, where same or similar reference numerals throughout represent same or similar elements or elements having same or similar functions. The embodiments described below with reference to the accompanying drawings are exemplary and are merely used to explain this application, and shall not be construed as a limitation on this application.

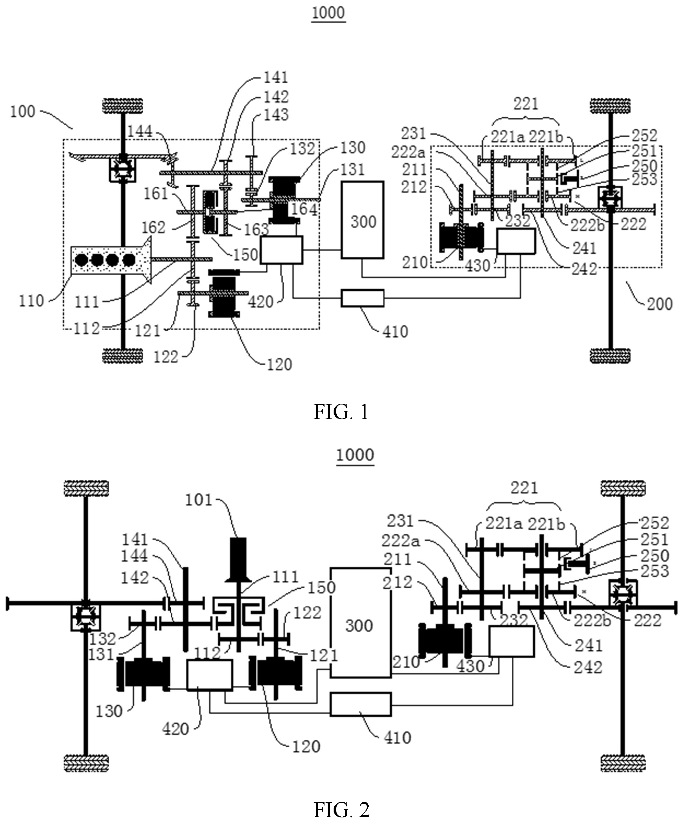

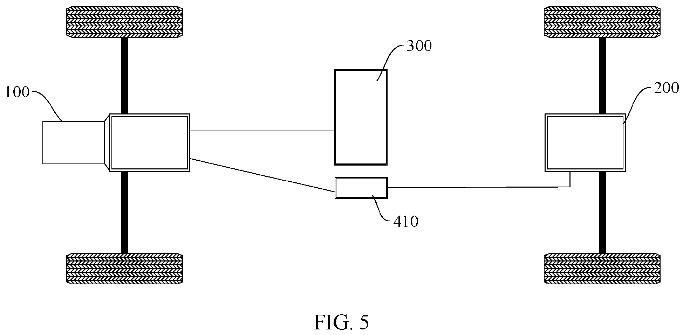

The following describes a hybrid drive system 1000 for a vehicle according to an embodiment of this application with reference to FIG. 1 to FIG. 5. The hybrid drive system 1000 provides power for traveling of the vehicle.

As shown in FIG. 1 to FIG. 4, a hybrid drive system 1000 according to an embodiment of this application includes: an electric drive powertrain 200 and a hybrid powertrain 100. The electric drive powertrain 200 is used for driving one of a front axle and a rear axle of a vehicle, and the electric drive powertrain 200 has at least a first gear position and a second gear position. The hybrid powertrain 100 is used for driving the other of the front axle and the rear axle of the vehicle. The electric drive powertrain 200 may be in transmission connection to one of a front drive axle (namely, the front axle) and a rear drive axle (namely, the rear axle) of the vehicle, and the hybrid powertrain 100 may be in transmission connection to the other of the front drive axle and the rear drive axle. In this application, an example in which the electric drive powertrain 200 is in transmission connection to the rear drive axle and the hybrid powertrain 100 is in transmission connection to the front drive axle is used for description. The electric drive powertrain 200 may drive rear wheels of the vehicle to move, and the hybrid powertrain 100 may drive front wheels of the vehicle to move.

The hybrid powertrain 100 and the electric drive powertrain 200 are configured to: control the hybrid powertrain 100 to drive the vehicle, and/or control the electric drive powertrain 200 to drive the vehicle based on a target gear position, and the target gear position includes the first gear position and the second gear position. It should be noted that the hybrid powertrain 100 may be controlled to independently drive the vehicle to travel, the electric drive powertrain 200 may be controlled to drive, based on the target gear position, the vehicle to travel, or the hybrid powertrain 100 and the electric drive powertrain 200 may be controlled to simultaneously drive the vehicle to travel.

Specifically, when the vehicle travels, based on a traveling condition and a driver requirement, a user may choose to control the hybrid powertrain 100 or the electric drive powertrain 200 to drive the vehicle to travel, or choose to control the hybrid powertrain 100 and the electric drive powertrain 200 to drive the vehicle to travel, so that the hybrid drive system 1000 is in an operating mode that matches the traveling condition, and selects an optimal operating mode that matches the vehicle. In this way, operating efficiency of the hybrid drive system 1000 can be improved, and energy consumption of the hybrid drive system 1000 can also be reduced. A power requirement of the vehicle can be met when the vehicle travels in different road conditions, so that power performance of the hybrid drive system 1000 can be improved, an off-road recovery capability and a hill-climbing capability of the vehicle can be improved, and the operating mode of the hybrid drive system 1000 can also meet the driver requirement.

Further, a control screen may be mounted in the vehicle, and the user may control, through the control screen, the hybrid powertrain 100 to drive the vehicle to travel, the user may control, through the control screen, the electric drive powertrain 200 to drive the vehicle to travel, or the user may control, through the control screen, the hybrid powertrain 100 and the electric drive powertrain 200 to simultaneously drive the vehicle to travel, to improve a sense of science and technology of the vehicle.

Therefore, the electric drive powertrain 200 and the hybrid powertrain 100 cooperatively operates, so that, based on the traveling condition and the driver requirement, at least one of the hybrid powertrain 100 and the electric drive powertrain 200 can be properly selected to drive the vehicle, and an optimal operating mode that matches the vehicle can be selected. In this way, the operating efficiency of the hybrid drive system 1000 can be improved, and the energy consumption of the hybrid drive system 1000 can also be reduced. The power requirement of the vehicle can be met when the vehicle travels in different road conditions, so that the off-road recovery capability and the hill-climbing capability of the vehicle can be improved.

In some embodiments of this application, the electric drive powertrain 200 and the hybrid powertrain 100 are configured to: obtain first mode selection information, and enter a first power drive mode corresponding to the first mode selection information. The first power drive mode includes a first driving mode, a second driving mode, and a third driving mode.

When the vehicle travels on a road, the first driving mode may be selected, so that the hybrid drive system 1000 operates in the first driving mode. In this way, the operating efficiency of the hybrid drive system 1000 can be improved, and the energy consumption of the hybrid drive system 1000 can also be reduced.

When the vehicle travels on sand, ice and snow, a muddy road, rocky terrain, ravine, or sloped terrain, the second driving mode may be selected, so that the hybrid drive system 1000 operates in the second driving mode. In this way, the power performance of the hybrid drive system 1000 can be improved, and off-road performance, the off-road recovery capability, and the hill-climbing capability of the vehicle can be improved.

When wheels of the vehicle are deeply stuck in a sand pit or a mud pit, slip, climbs over large steps, or stuck in a ravine, the third driving mode may be selected, so that the hybrid drive system 1000 operates in the third driving mode. In this way, the power performance of the hybrid drive system 1000 can be improved, and the off-road performance, the off-road recovery capability, and the hill-climbing capability of the vehicle can be improved.

Specifically, the user may select the first mode selection information through the control screen. After the user selects the first mode selection information through the control screen, an interface of the control screen enters the first driving mode, the second driving mode, and the third driving mode that correspond to the first mode selection information. The user may properly select any one of the first driving mode, the second driving mode, and the third driving mode based on the traveling condition and the driver requirement, so that the hybrid drive system 1000 meets an operating requirement of the vehicle. For example, when the vehicle travels on a road, the user may select the first driving mode, so that the hybrid drive system 1000 operates in the first driving mode. In this way, the operating efficiency of the hybrid drive system 1000 can be improved, and the energy consumption of the hybrid drive system 1000 can also be reduced. When the vehicle travels on sand, ice and snow, a muddy road, rocky terrain, ravine, or sloped terrain, the second driving mode may be selected, so that the hybrid drive system 1000 operates in the second driving mode. In this way, the power performance of the hybrid drive system 1000 can be improved, and the off-road performance, the off-road recovery capability, and the hill-climbing capability of the vehicle can be improved. When wheels of the vehicle are deeply stuck in a sand pit or a mud pit, slip, climbs over large steps, or stuck in a ravine, the third driving mode may be selected, so that the hybrid drive system 1000 operates in the third driving mode. In this way, the power performance of the hybrid drive system 1000 can be improved, and the off-road performance, the off-road recovery capability, and the hill-climbing capability of the vehicle can be improved.

It should be noted that after the hybrid drive system 1000 provided in this application is mounted on a vehicle, the vehicle can simultaneously possess economy, power performance and off-road performance.

Therefore, because the first power drive mode includes the first driving mode, the second driving mode, and the third driving mode, based on the traveling condition and the driver requirement, an operating mode of the hybrid drive system 1000 can be properly selected, and an optimally matched operating mode can be selected, meeting use requirements of different vehicle users. In this way, the operating efficiency of the hybrid drive system 1000 can be reduced, the energy consumption of the hybrid drive system 1000 can also be reduced, the power performance of the hybrid drive system 1000 can be improved, and the off-road performance, the off-road recovery capability, and the hill-climbing capability of the vehicle can be improved.

In some embodiments of this application, when the first driving mode is entered, the electric drive powertrain 200 and the hybrid powertrain 100 are configured to: obtain second mode selection information, and enter a second power drive mode corresponding to the second mode selection information. The second power drive mode includes: a sports mode, an economy mode, and a comfort mode.

The user may select the first mode selection information through the control screen. After the user selects the first mode selection information through the control screen, an interface of the control screen enters the first driving mode, the second driving mode, and the third driving mode that correspond to the first mode selection information. After the user selects the first driving mode on the interface of the control screen, when the first driving mode is entered, second mode selection information is obtained, the second power drive mode corresponding to the second mode selection information is entered. An interface of the control screen enters the sports mode, the economy mode, and the comfort mode that correspond to the second mode selection information. The user can properly select any one of the sports mode, the economy mode, and the comfort mode based on the traveling condition or the driver requirement, so that the hybrid drive system 1000 meets an operating requirement of the vehicle. In this way, an optimally matched operating mode can be selected, to meet use requirements of different vehicle users, which can further enhance operating efficiency of the hybrid drive system 1000, and can further reduce energy consumption of the hybrid drive system 1000.

In some embodiments of this application, the first mode selection information is obtained on a first interface of a vehicle-mounted terminal, and the second mode selection information is obtained on a second interface of the vehicle-mounted terminal. The vehicle-mounted terminal may be the control screen in the foregoing embodiment, the first mode selection information is located on the first interface of the vehicle-mounted terminal, and the second mode selection information is located on the second interface of the vehicle-mounted terminal. The user can select the first mode selection information on the first interface of the vehicle-mounted terminal. When the first driving mode is entered, the vehicle-mounted terminal is switched to the second interface. The user can select the second mode selection information on the second interface of the vehicle-mounted terminal, and then the hybrid drive system 1000 enters the second power drive mode corresponding to the second mode selection information. In this way, effect of obtaining the first mode selection information and the second mode selection information on different interfaces can be implemented, so that a sense of science and technology of the vehicle can be improved.

In some embodiments of this application, when the comfort mode is entered, operating statuses of the electric drive powertrain (200) and the hybrid powertrain (100) are controlled based on obtained vehicle speed information and requested torque information. A control unit of the vehicle can be in communication connection with a vehicle speed sensor. The requested torque information can be stored in the control unit. The vehicle speed sensor can transmit the detected vehicle speed information to the control unit, so that the control unit obtains the vehicle speed information. When the comfort mode is entered, the control unit controls the operating statuses of the electric drive powertrain 200 and the hybrid powertrain 100 based on the obtained vehicle speed information and the requested torque information, so that the electric drive powertrain 200 and the hybrid powertrain 100 achieve an optimally matched operating mode. Therefore, the electric drive powertrain 200 and the hybrid powertrain 100 meet a use requirement, and then riding comfort of the vehicle is improved and riding experience of the user is improved.

In some embodiments of this application, as shown in FIG. 1 and FIG. 2, the electric drive powertrain 200 may include: a first drive motor 210, a first gear pair 222, a second gear pair 221, and a first output shaft 241. The first gear pair 222 is in transmission connection to the first drive motor 210, the second gear pair 221 is in transmission connection to the first drive motor 210, and the first output shaft 241 is selectively in transmission connection to the first gear pair 222 and the second gear pair 221. When the first output shaft 241 is in transmission with the first gear pair 222, the electric drive powertrain 200 is in the first gear position. When the first output shaft 241 is in transmission with the second gear pair 221, the electric drive powertrain 200 is in the second gear position.

When the first output shaft 241 is in transmission with the first gear pair 222, the first output shaft 241 is disconnected from the second gear pair 221. When the first output shaft 241 is in transmission with the second gear pair 221, the first output shaft 241 is disconnected from the first gear pair 222. Further, a gear ratio of the first gear pair 222 is smaller than a gear ratio of the second gear pair 221, that is, a gear ratio of the first gear position is smaller than a gear ratio of the second gear position. A first output gear 242 may be disposed on the first output shaft 241. The first output gear 242 is configured to be in transmission connection to a power input gear of the rear drive axle. When the first output shaft 241 rotates, the first output gear 242 can be driven to rotate, so that effect of driving the rear wheels to rotate is implemented. When the first output shaft 241 is in transmission connection to the first gear pair 222, the electric drive powertrain 200 operates in the first gear position, and when the first output shaft 241 is in transmission connection to the second gear pair 221, the electric drive powertrain 200 operates in the second gear position. In this way, the electric drive powertrain 200 can have a plurality of operating gear positions, and the operating gear position of the electric drive powertrain 200 can be properly selected based on the obtained vehicle speed information, the requested torque information, the traveling condition, and the driver requirement, so that the gear position electric drive powertrain 200 meets the driving requirement of the vehicle.

It should be noted that when the first output shaft 241 is disconnected from both the first gear pair 222 and the second gear pair 221, the electric drive powertrain 200 is in a neutral position, and in this case, the electric drive powertrain 200 does not transmit torque to the rear drive axle.

In some embodiments of this application, as shown in FIG. 1 and FIG. 2, the electric drive powertrain 200 further includes: a first transmission shaft 231. The first gear pair 222 may include a first transmission gear 222a and a second transmission gear 222b. The first transmission gear 222a is engaged with the second transmission gear 222b. The first transmission gear 222a is fastened to the first transmission shaft 231. A third motor shaft 211 of the first drive motor 210 is fixedly provided with a first gear 212, the first transmission shaft 231 is fixedly provided with a second gear 232, and the second gear 232 is engaged with the first gear 212. The second gear pair 221 may include a third transmission gear 221a and a fourth transmission gear 221b. The third transmission gear 221a is engaged with the fourth transmission gear 221b, and the third transmission gear 221a is fastened to the first transmission shaft 231.

Further, as shown in FIG. 1 and FIG. 2, the electric drive powertrain 200 may further include: a first engaging apparatus 250. The first engaging apparatus 250 may be a synchronizer. The first output shaft 241 passes through the second transmission gear 222b and the fourth transmission gear 221b, and the first output shaft 241 is provided with a first connecting portion 251. The first connecting portion 251 is located between the second transmission gear 222b and the fourth transmission gear 221b. The fourth transmission gear 221b is provided with a second connecting portion 252. The second transmission gear 222b is provided with a third connecting portion 253. The first connecting portion 251 is selectively connected to the second connecting portion 252 and the third connecting portion 253 by moving a second engaging apparatus 150, so that the first output shaft 241 can be selectively in transmission connection to the first gear pair 222 and the second gear pair 221, or the first output shaft 241 is not in transmission connection to both the first gear pair 222 and the second gear pair 221, and in this case, the electric drive powertrain 200 is in the neutral position. Therefore, effect of controlling the operating gear position of the electric drive powertrain 200 through the first engaging apparatus 250 is implemented, and the electric drive powertrain 200 can be controlled to switch between the first gear position, the second gear position, and the neutral position.

In some embodiments of this application, a gear ratio range of the first gear position is A, meeting a relational expression: 9≤A≤15. Alternatively, it may also be understood that a gear ratio range of the first gear pair 222 is A, meeting a relational expression: 9≤A≤15. When the electric drive powertrain 200 operates in the first gear position, the gear ratio range of the first gear position is set to 9 to 15, so that the electric drive powertrain 200 can optimally match operation of the vehicle.

In some embodiments of this application, a gear ratio range of the second gear position is B, meeting a relational expression: 18≤B≤25. It may also be understood that a gear ratio range of the second gear pair 221 is B, meeting a relational expression: 18≤B≤25. When the electric drive powertrain 200 operates in the second gear position, the gear ratio range of the second gear position is set to 18 to 25, so that the electric drive powertrain 200 can optimally match operation of the vehicle.

In some embodiments of this application, when the first output shaft 241 is disconnected from both the first gear pair 222 and the second gear pair 221, the electric drive powertrain 200 is in the third gear position (namely, the neutral position in the foregoing embodiment). When the comfort mode is entered, the electric drive powertrain 200 is automatically switched between the first gear position and the third gear position. When the comfort mode is entered, the electric drive powertrain 200 can be automatically switched between the first gear position and the third gear position to select an optimally matched operating mode, so that the electric drive powertrain 200 meets a driving requirement of the vehicle, operating efficiency of the hybrid drive system 1000 can be further improved, energy consumption of the hybrid drive system 1000 can also be reduced, and power performance of the hybrid drive system 1000 can be further improved.

In some embodiments of this application, when the comfort mode is entered, the electric drive powertrain 200 can be manually switched between the first gear position, the second gear position, and the third gear position, that is, when the comfort mode is entered, the user can manually switch the electric drive powertrain 200 to one of the first gear position, the second gear position, and the third gear position. When the comfort mode is entered, the user can control the electric drive powertrain 200 to switch to one of the first gear position, the second gear position, and the third gear position through an interface of the vehicle-mounted terminal, so that the electric drive powertrain 200 meets use requirements of different vehicle users, and comfort of the vehicle can be further improved.

In some embodiments of this application, when the economy mode is entered, the hybrid powertrain 100 is controlled to be in the operating status and the electric drive powertrain 200 is controlled to be in the third gear position. When the economy mode is entered, the control unit of the vehicle can control the hybrid powertrain 100 to operate, and the control unit can control the electric drive powertrain 200 to be in the third gear position through the first engaging apparatus 250, so that the electric drive powertrain 200 meets use requirements of different vehicle users, and economy of the hybrid drive system 1000 and the vehicle can be further improved.

In some embodiments of this application, when the economy mode is entered, the electric drive powertrain 200 can be manually controlled to switch to the first gear position or the second gear position. When the economy mode is entered, the user can control the electric drive powertrain 200 to switch to the first gear position or the second gear position through an interface of the vehicle-mounted terminal, so that the electric drive powertrain 200 meets use requirements of different vehicle users, and economy of the hybrid drive system 1000 and the vehicle can be further improved.

In some embodiments of this application, when the sports mode is entered, the hybrid powertrain 100 is controlled to be in the operating status and the electric drive powertrain 200 is controlled to be in the first gear position. When the sports mode is entered, the control unit of the vehicle can control the hybrid powertrain 100 to operate, and the user can control the electric drive powertrain 200 to switch to the first gear position through an interface of the vehicle-mounted terminal, so that the electric drive powertrain 200 meets use requirements of different vehicle users, and power of the electric drive powertrain 200 is ensured.

In some embodiments of this application, when the third driving mode is entered, the hybrid powertrain 100 is controlled to operate and the electric drive powertrain 200 is controlled to be in the second gear position. When the third driving mode is entered, the control unit of the vehicle can control the hybrid powertrain 100 to operate, and the user can control the electric drive powertrain 200 to switch to the second gear position through an interface of the vehicle-mounted terminal, so that the electric drive powertrain 200 operates at a high-gear-ratio gear position and the electric drive powertrain 200 has sufficient output power, the power performance of the hybrid drive system 1000 can be improved, the off-road performance, the off-road recovery capability, and the hill-climbing capability of the vehicle can be further improved.

In some embodiments of this application, when the third driving mode is entered, the electric drive powertrain 200 can be manually controlled to switch to the first gear position. When the third driving mode is entered, the user can control the electric drive powertrain 200 to switch to the first gear position through an interface of the vehicle-mounted terminal, so that the electric drive powertrain 200 meets use requirements of different vehicle users while ensuring power output of the electric drive powertrain 200.

In some embodiments of this application, when the second driving mode is entered, the hybrid powertrain 100 is controlled to operate and the electric drive powertrain 200 is controlled to be in the first gear position. When the second driving mode is entered, the control unit of the vehicle can control the hybrid powertrain 100 to operate, and the control unit can control the electric drive powertrain 200 to switch to the first gear position. In this way, the off-road performance, the off-road recovery capability and the hill-climbing capability of the vehicle can be improved.

In some embodiments of this application, when the second driving mode is entered, the electric drive powertrain 200 can be manually controlled to switch to the second gear position. When the second driving mode is entered, after the electric drive powertrain 200 is switched to the first gear position, the user can control the electric drive powertrain 200 to switch to the second gear position through an interface of the vehicle-mounted terminal. In this way, the power performance of the hybrid drive system 1000 can be further improved, and the off-road performance, the off-road recovery capability, and the hill-climbing capability of the vehicle can be further improved, so that the electric drive powertrain 200 meets use requirements of different vehicle users.

In some embodiments of this application, as shown in FIG. 1 to FIG. 4, the hybrid powertrain 100 may include: an engine 110, a generator 120, a second output shaft 141, and a second drive motor 130. The generator 120 is in transmission connection to the engine 110, and the generator 120 is configured to connect to a power battery 300 of the vehicle. The second output shaft 141 is selectively in transmission connection to the engine 110, and the second drive motor 130 is in transmission connection to the second output shaft 141. The generator 120 is connected to the power battery 300. When the generator 120 operates, electricity generated by the generator 120 can be stored in the power battery 300, so that effect of charging the power battery 300 is implemented. After the second output shaft 141 is in transmission connection to the engine 110. When the engine 110 operates, power of the engine 110 can be transmitted to the second output shaft 141, and the second output shaft 141 can drive the front wheels of the vehicle to rotate. When the second output shaft 141 is disconnected from the engine 110, power of the engine 110 cannot be transmitted to the second output shaft 141. The second drive motor 130 is in transmission connection to the second output shaft 141. When the second drive motor 130 operates, power of the second drive motor 130 can be transmitted to the front wheels through the second output shaft 141, to drive the front wheels of the vehicle to rotate.

As shown in FIG. 1, according to a hybrid powertrain 100 provided in a first embodiment of this application, the hybrid powertrain 100 may include: an engine 110, a generator 120, a second output shaft 141, and a second drive motor 130. A second output gear 144 may be disposed on the second output shaft 141. The second output gear 144 is configured to be in transmission connection to a power input gear of the rear drive axle. When the second output shaft 141 rotates, the second output gear 144 can be driven to rotate, so that effect of driving the front wheels to rotate is implemented.

The hybrid powertrain 100 may further include: a second engaging apparatus 150. The engine 110 can be selectively in transmission connection to the second output shaft 141 through the second engaging apparatus 150. The second engaging apparatus 150 may include: a first engaging portion and a second engaging portion that are selectively engaged. The first engaging portion is in transmission connection to an engine output shaft 111 of the engine 110, and the second engaging portion is in transmission connection to the second output shaft 141. Further, the first engaging portion is connected to a first connecting shaft 161. The first connecting shaft 161 is fixedly provided with a third gear 162. The second engaging portion is connected to a second connecting shaft 164. The second connecting shaft 164 is fixedly provided with a fourth gear 163. The engine output shaft 111 of the engine 110 is provided with a fifth gear 112. The second output shaft 141 is provided with a sixth gear 142. The third gear 162 is engaged with the fifth gear 112. The fourth gear 163 is engaged with the sixth gear 142.

The second output shaft 141 is further provided with a seventh gear 143. A second motor shaft 131 of the second drive motor 130 is provided with an eighth gear 132. The seventh gear 143 is engaged with the eighth gear 132. By engaging the seventh gear 143 with the eighth gear 132, when the second drive motor 130 operates, power of the second drive motor 130 can be transmitted to the second output shaft 141, so that effect of driving the vehicle to travel through the second drive motor 130 is implemented. The first motor shaft 121 of the generator 120 is provided with a ninth gear 122, and the ninth gear 122 is engaged with the fifth gear 112. Through engagement of the ninth gear 122 with the fifth gear 112. When the engine 110 operates, the engine 110 can drive the generator 120 to generate electricity.

As shown in FIG. 2, according to a hybrid powertrain 100 provided in a second embodiment of this application, the hybrid powertrain 100 may include: an engine 110, a generator 120, a second output shaft 141, and a second drive motor 130. A second output gear 144 may be disposed on the second output shaft 141. The second output gear 144 is configured to be in transmission connection to a power input gear of the rear drive axle. When the second output shaft 141 rotates, the second output gear 144 can be driven to rotate so that effect of driving the front wheels to rotate is implemented.

The hybrid powertrain 100 may further include: a second engaging apparatus 150. The engine 110 can be selectively in transmission connection to the second output shaft 141 through the second engaging apparatus 150. The second engaging apparatus 150 may include: a first engaging portion and a second engaging portion. The first engaging portion is fastened to an engine output shaft 111 of the engine 110. The second engaging portion is connected to the fourth gear 163. The second output shaft 141 is provided with a sixth gear 142. The fourth gear 163 is engaged with the sixth gear 142. A second motor shaft 131 of the second drive motor 130 is provided with an eighth gear 132. The eighth gear 132 is engaged with the fourth gear 163. When the second drive motor 130 operates, power can be transmitted to the second output shaft 141. The engine output shaft 111 is fixedly provided with a fifth gear 112. A first motor shaft 121 of the generator 120 is fixedly provided with a ninth gear 122. The ninth gear 122 is engaged with the fifth gear 112. When the engine 110 operates, the generator 120 can be driven to generate electricity. The hybrid powertrain 100 provided in the second embodiment of this application mainly differs from the hybrid powertrain 100 provided in the first embodiment of this application in that: Arrangement location and manner of the second engaging apparatus 150 are different, and a structure of the second output shaft 141 is different.

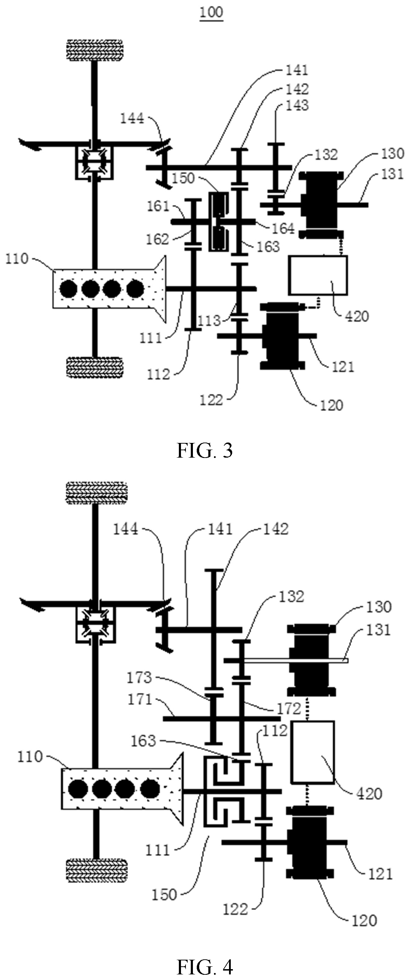

As shown in FIG. 3, according to a hybrid powertrain 100 provided in a third embodiment of this application, the hybrid powertrain 100 provided in the third embodiment of this application mainly differs from the hybrid powertrain 100 provided in the first embodiment of this application in that: A tenth gear 113 is disposed on the engine output shaft 111, and the tenth gear 113 is engaged between the ninth gear 122 on the first motor shaft 121 of the generator 120 and the fourth gear 163.

As shown in FIG. 4, according to a hybrid powertrain 100 provided in a fourth embodiment of this application, the hybrid powertrain 100 may include: an engine 110, a generator 120, a second output shaft 141, and a second drive motor 130. A second output gear 144 may be disposed on the second output shaft 141. The second output gear 144 is configured to be in transmission connection to a power input gear of the rear drive axle. When the second output shaft 141 rotates, the second output gear 144 can be driven to rotate, so that effect of driving the front wheels to rotate is implemented.

The hybrid powertrain 100 may further include: a second engaging apparatus 150 and a second transmission shaft 171. The engine 110 can be selectively in transmission connection to the second output shaft 141 through the second engaging apparatus 150. The second engaging apparatus 150 may include: a first engaging portion and a second engaging portion. The first engaging portion is fastened to an engine output shaft 111 of the engine 110. A fourth gear 163 is connected to the second engaging portion. The second transmission shaft 171 is fixedly provided with an eleventh gear 172 and a twelfth gear 173. The second output shaft 141 is provided with a sixth gear 142, and the twelfth gear 173 is engaged with the sixth gear 142. A second motor shaft 131 of the second drive motor 130 is provided with an eighth gear 132. The eighth gear 132 is engaged with the eleventh gear 172. The eleventh gear 172 is further engaged with the fourth gear 163. The eleventh gear 172 is engaged between the fourth gear 163 and the eighth gear 132. When the second drive motor 130 operates, power can be sequentially transmitted to the second transmission shaft 171 and the second output shaft 141. The engine output shaft 111 is fixedly provided with a fifth gear 112. A first motor shaft 121 of the generator 120 is fixedly provided with a ninth gear 122. The ninth gear 122 is engaged with the fifth gear 112. When the engine 110 operates, the generator 120 can be driven to generate electricity.

It should be noted that the electric drive powertrains 200 in the hybrid drive system 1000 of the first embodiment to the hybrid drive system 1000 of the fourth embodiment have a same structure, and only the hybrid powertrains 100 have different structures.

In some embodiments of this application, as shown in FIG. 2, the engine output shaft 111 of the engine 110 is disposed in a width direction of the vehicle, so that effect of transversely arranging the engine 110 is implemented, and the hybrid powertrain 100 adapts to a mounting space of the vehicle.

In some embodiments of this application, as shown in FIG. 2, the generator 120 is disposed on one side of the engine output shaft 111. A first motor shaft 121 of the generator 120 is arranged in the width direction of the vehicle. A second drive motor 130 is disposed on the other side of the engine output shaft 111. A second motor shaft 131 of the second drive motor 130 is arranged in the width direction of the vehicle. Further, the engine output shaft 111, the first motor shaft 121, and the second motor shaft 131 are parallel to each other. Effect of transversely arranging the engine 110, the generator 120, and the second drive motor 130 is implemented, so that the hybrid powertrain 100 more adapts to a mounting space of the vehicle.

In some embodiments of this application, as shown in FIG. 1, FIG. 3, and FIG. 4, the engine output shaft 111 of the engine 110 is disposed in a length direction of the vehicle, so that effect of longitudinally arranging the engine 110 is implemented, and the hybrid powertrain 100 adapts to a mounting space of the vehicle.

In some embodiments of this application, as shown in FIG. 1, FIG. 3, and FIG. 4, the generator 120 is disposed on one side of the engine output shaft 111. A first motor shaft 121 of the generator 120 is disposed in a length direction of the vehicle. A second drive motor 130 is disposed on the other side of the engine output shaft 111. A second motor shaft 131 of the second drive motor 130 is arranged in the length direction of the vehicle. Further, the engine output shaft 111, the first motor shaft 121, and the second motor shaft 131 are parallel to each other. An effect of longitudinally arranging the engine 110, the generator 120, and the second drive motor 130 is implemented, so that the hybrid powertrain 100 more adapts to a mounting space of the vehicle.

In some embodiments of this application, as shown in FIG. 1 and FIG. 2, the electric drive powertrain 200 and the hybrid powertrain 100 share a controller 410. The controller 410 may be the control unit in the foregoing embodiment. The controller 410 is in communication connection with the generator 120, the second drive motor 130, and the first drive motor 210. The controller 410 can control the generator 120, the second drive motor 130, and the first drive motor 210 to operate. Because the electric drive powertrain 200 and the hybrid powertrain 100 share one controller 410, a quantity of the controller 410 can be reduced, so that a structure of the hybrid drive system 1000 can be simplified.

Further, the controller 410 can be connected to the first drive motor 210 through a first electronic control unit 430, and the controller 410 controls the first drive motor 210 to operate through the first electronic control unit 430. The controller 410 can be connected to the generator 120 and the second drive motor 130 through a second electronic control unit 420, and the controller 410 controls the second drive motor 130 and the generator 120 to operate through the second electronic control unit 420.

In some embodiments of this application, the electric drive powertrain 200 is disposed on the rear axle of the vehicle, and the hybrid powertrain 100 is disposed on the front axle of the vehicle. It may also be understood that the electric drive powertrain 200 is disposed on the rear drive axle of the vehicle, and the hybrid powertrain 100 is disposed on the front drive axle of the vehicle. A chassis between the front axle and the rear axle is configured to dispose the power battery 300 of the vehicle, and the electric drive powertrain 200 and the hybrid powertrain 100 share the power battery 300. The first drive motor 210 and the engine 110 are both connected to the power battery 300. When the first drive motor 210 generates electricity, the electricity can be stored in the power battery 300. When the engine 110 generates electricity, the electricity can be stored in the power battery 300. The power battery 300 can also supply power to the first drive motor 210, so that the first drive motor 210 operates normally.

It should be noted that the electric drive powertrain 200 of this application can implement switching between three gear positions, namely a first gear position, a second gear position, and a third gear position, where the first gear position is a low gear position (a small gear ratio), the second gear position is a high gear position (a large gear ratio), and the third gear position is a neutral position.

The electric drive powertrain 200 has five operating modes: A first mode is that the electric drive powertrain 200 operates in the first gear position. A second mode is that the electric drive powertrain 200 operates in the second gear position. A third mode is that the electric drive powertrain 200 operates in a third gear position, namely the neutral position, and does not transmit torque. A fourth mode is that feedback is performed in the first gear position, the rear wheels rotate to drive the first drive motor 210 to operate, and power is fed back from the wheels to the first drive motor 210, and the first drive motor 210 generates electricity for the power battery 300. A fifth mode is that feedback is performed in the second gear position, the rear wheels rotate to drive the first drive motor 210 to operate, and power is fed back from the wheels to the first drive motor 210, and the first drive motor 210 generates electricity for the power battery 300.

The hybrid powertrain 100 has six operating modes:

A first mode is a direct drive mode, in which the second engaging apparatus 150 is disconnected, the engine 110 independently and directly drives the vehicle to travel, and in this mode, the second drive motor 130 does not drive the vehicle to travel.

A second mode is a series mode, in which the second engaging apparatus 150 is disconnected, the second drive motor 130, the engine 110, and the generator 120 all operate, the second drive motor 130 drives the vehicle to travel, the engine 110 drives the generator 120 to generate electricity, and then the generator 120 directly outputs a current to the second drive motor 130.

A third mode is a power generation mode, in which the second engaging apparatus 150 is disconnected, the vehicle stops, and the engine 110 drives the generator 120 to generate electricity (the vehicle stops, and the electric drive powertrain 200 does not operate).

A fourth mode is a parallel mode, in which the second engaging apparatus 150 is engaged, the second drive motor 130 and the engine 110 simultaneously drive the vehicle to travel, and the generator 120 has no power output (is freewheeling).

A fifth mode is a pure electric mode, in which the second engaging apparatus 150 is disconnected, the second drive motor 130 directly drives the vehicle to travel, and the engine 110 does not drive the vehicle to travel.

A sixth mode is a power feeding mode, in which the second engaging apparatus 150 is disconnected, and the second drive motor 130 feeds electricity back to the power battery 300 through reverse drag of the wheels.

The hybrid drive system 1000 of this application can be switched between the plurality of operating modes. The vehicle can select an optimally matched operating mode based on a vehicle speed, a torque requirement, and a driver requirement, to meet use requirements of different vehicle users.

When the vehicle climbs a slope at a low speed or is in off-road recovery, the electric drive powertrain 200 is switched to the first gear position, having a high gear ratio and torque. When the vehicle travels on a road and other normal road conditions, the electric drive powertrain 200 is switched to the second gear position, having a relatively small gear ratio and torque, and the electric drive powertrain 200 has high efficiency. When the hybrid drive system 1000 is mounted on a four-wheel-drive vehicle and operates, if the hybrid powertrain 100 has sufficient power, the electric drive powertrain 200 can be switched to the third gear position, so that braking losses of the electric drive powertrain 200 is eliminated, and efficiency is further improved. The hybrid drive system 1000 of this application has diverse sports modes, allowing for free switching between a plurality of sports modes to meet different requirements of different environments, different drivers, and different road conditions. A variety of driving experiences can be achieved.

By mounting the hybrid drive system 1000 of this application on a vehicle, a front axle and a rear axle of the vehicle can be simultaneously driven, so that the vehicle has strong power, short acceleration time, reduced fuel consumption of the vehicle, and an increased driving range of the vehicle.

A vehicle according to an embodiment of this application includes the drive system in the foregoing embodiment. Based on a traveling condition and a driver requirement, an operating mode of the hybrid drive system 1000 can be properly selected, and an optimally matched operating mode can be selected. In this way, the operating efficiency of the hybrid drive system 1000 can be improved, the energy consumption of the hybrid drive system 1000 can also be reduced, the power performance of the hybrid drive system 1000 can be improved, and the off-road performance, the off-road recovery capability, and the hill-climbing capability of the vehicle can be improved.

In the description of this specification, descriptions referring to the terms "one embodiment", "some embodiments", "exemplary embodiments", "examples", "specific examples" or "some examples" mean that specific features, structures, materials or characteristics described in connection with this embodiment or example are included in at least one embodiment or example of this application. In this specification, the schematic representations of the foregoing terms are not necessarily aimed at the same embodiment or example. Moreover, specific features, structures, materials or characteristics described may be combined in any one or more embodiments or examples in a suitable manner.

Although the embodiments of this application have been shown and described, persons of ordinary skill in the art can understand that many changes, modifications, substitutions and variations can be made to these embodiments without departing from the principles and purposes of this application, and the scope of this application is defined by the claims and their equivalents.

## Claims

1. A hybrid drive system (1000) for a vehicle, comprising:
an electric drive powertrain (200) for driving one of a front axle and a rear axle of the vehicle, the electric drive powertrain (200) having at least a first gear position and a second gear position; and
a hybrid powertrain (100) for driving the other of the front axle and the rear axle of the vehicle, wherein
the hybrid powertrain (100) and the electric drive powertrain (200) are configured to: control the hybrid powertrain (100) to drive the vehicle, and/or control the electric drive powertrain (200) to drive the vehicle based on a target gear position, and the target gear position comprises the first gear position and the second gear position.

2. The hybrid drive system (1000) for a vehicle according to claim 1, the electric drive powertrain (200) and the hybrid powertrain (100) being configured to: obtain first mode selection information, and enter a first power drive mode corresponding to the first mode selection information, and the first power drive mode comprising a first driving mode, a second driving mode, and a third driving mode.

3. The hybrid drive system (1000) for a vehicle according to claim 2, when the first driving mode is entered, the electric drive powertrain (200) and the hybrid powertrain (100) being configured to: obtain second mode selection information, and enter a second power drive mode corresponding to the second mode selection information, and the second power drive mode comprising a sports mode, an economy mode, and a comfort mode.

4. The hybrid drive system (1000) for a vehicle according to claim 3, the first mode selection information being obtained on a first interface of a vehicle-mounted terminal, and the second mode selection information being obtained on a second interface of the vehicle-mounted terminal.

5. The hybrid drive system (1000) for a vehicle according to claim 3, when the comfort mode is entered, controlling operating statuses of the electric drive powertrain (200) and the hybrid powertrain (100) based on obtained vehicle speed information and requested torque information.

6. The hybrid drive system (1000) for a vehicle according to claim 5, the electric drive powertrain (200) comprising:
a first drive motor (210);
a first gear pair (222), the first gear pair (222) being in transmission connection to the first drive motor (210);
a second gear pair (221), the second gear pair (221) being in transmission connection to the first drive motor (210); and
a first output shaft (241), the first output shaft (241) being selectively in transmission connection to the first gear pair (222) and the second gear pair (221), when the first output shaft (241) is in transmission with the first gear pair (222), the electric drive powertrain (200) being in the first gear position, and when the first output shaft (241) is in transmission with the second gear pair (221), the electric drive powertrain (200) being in the second gear position.

7. The hybrid drive system (1000) for a vehicle according to claim 6, a gear ratio range of the first gear position being A, and meeting: 9≤A≤15.

8. The hybrid drive system (1000) for a vehicle according to claim 6 or 7, a gear ratio range of the second gear position being B, and meeting: 18≤B≤25.

9. The hybrid drive system (1000) for a vehicle according to any one of claims 6 to 8, when the first output shaft (241) is disconnected from both the first gear pair (222) and the second gear pair (221), the electric drive powertrain (200) being in a third gear position, and when the comfort mode is entered, the electric drive powertrain (200) being automatically switched between the first gear position and the third gear position.

10. The hybrid drive system (1000) for a vehicle according to claim 9, when the comfort mode is entered, the electric drive powertrain (200) being capable of being manually switched between the first gear position, the second gear position, and the third gear position.

11. The hybrid drive system (1000) for a vehicle according to claim 9, when the economy mode is entered, controlling the hybrid powertrain (100) to be in the operating status, and controlling the electric drive powertrain (200) to be in the third gear position.

12. The hybrid drive system (1000) for a vehicle according to claim 11, when the economy mode is entered, the electric drive powertrain (200) being capable of being manually controlled to switch to the first gear position or the second gear position.

13. The hybrid drive system (1000) for a vehicle according to claim 6, when the sports mode is entered, controlling the hybrid powertrain (100) to be in the operating status, and controlling the electric drive powertrain (200) to be in the first gear position.

14. The hybrid drive system (1000) for a vehicle according to claim 6, the hybrid powertrain (100) comprising:
an engine (110);
a generator (120), the generator (120) being in transmission connection to the engine (110), and the generator (120) being configured to connect to a power battery (300) of the vehicle;
a second output shaft (141), the second output shaft (141) being selectively in transmission connection to the engine (110); and
a second drive motor (130), the second drive motor (130) being in transmission connection to the second output shaft (141).

15. The hybrid drive system (1000) for a vehicle according to claim 6, when the third driving mode is entered, controlling the hybrid powertrain (100) to operate, and controlling the electric drive powertrain (200) to be in the second gear position.

16. The hybrid drive system (1000) for a vehicle according to claim 15, wherein when the third driving mode is entered, the electric drive powertrain (200) being capable of being manually controlled to switch to the first gear position.

17. The hybrid drive system (1000) for a vehicle according to claim 6, wherein when the second driving mode is entered, controlling the hybrid powertrain (100) to operate, and controlling the electric drive powertrain (200) to be in the first gear position.

18. The hybrid drive system (1000) for a vehicle according to claim 17, wherein when the second driving mode is entered, the electric drive powertrain (200) being capable of being manually controlled to switch to the second gear position.

19. The hybrid drive system (1000) for a vehicle according to claim 14, an engine output shaft (111) of the engine (110) being arranged in a width direction of the vehicle.

20. The hybrid drive system (1000) for a vehicle according to claim 19, the generator (120) being disposed on one side of the engine output shaft (111), a first motor shaft (121) of the generator (120) being arranged in the width direction of the vehicle, the second drive motor (130) being disposed on the other side of the engine output shaft (111), and a second motor shaft (131) of the second drive motor (130) being arranged in the width direction of the vehicle.

21. The hybrid drive system (1000) for a vehicle according to claim 14, an engine output shaft (111) of the engine (110) being arranged in a length direction of the vehicle.

22. The hybrid drive system (1000) for a vehicle according to claim 21, the generator (120) being disposed on one side of the engine output shaft (111), a first motor shaft (121) of the generator (120) being arranged in the length direction of the vehicle, the second drive motor (130) being disposed on the other side of the engine output shaft (111), and a second motor shaft (131) of the second drive motor (130) being arranged in the length direction of the vehicle.

23. The hybrid drive system (1000) for a vehicle according to any one of claims 1 to 22, the electric drive powertrain (200) and the hybrid powertrain (100) sharing a controller (410).

24. The hybrid drive system (1000) for a vehicle according to any one of claims 1 to 22,
the electric drive powertrain (200) being disposed on the rear axle of the vehicle;
the hybrid powertrain (100) being disposed on the front axle of the vehicle; and
a chassis between the front axle and the rear axle being configured to dispose the power battery (300) of the vehicle, and the electric drive powertrain (200) and the hybrid powertrain (100) sharing the power battery (300).

25. A vehicle, wherein the vehicle comprises the drive system (1000) for a vehicle according to any one of claims 1 to 24.
